# EUROPEAN PATENT APPLICATION

(11) **EP 1 016 808 A2**
(43) Date of publication of application: **05.07.2000**
(21) Application number: 99125655.3
(22) Date of filing: 22.12.1999
(51) Int. Cl.: F16H 57/04

(54) **Forced-feed lubricating system for gears**

(30) Priority: 28.12.1998 JP 37283598
(71) Applicant: NISSAN MOTOR COMPANY, LIMITED, Yokohama-shi, Kanagawa 221-0023 (JP)
(72) Inventor: Mori, Atsuhiro, Yokosuka-shi, Kanagawa 238-0056 (JP); Morikawa, Kunihiko, Hiratsuka-shi, Kanagawa 254-0805 (JP); Shinmyo, Masahiro, Atsugi-shi, Kanagawa 243-0000 (JP); Nishihara, Ryuuta, Yokosuka-shi, Kanagawa 237-0062 (JP)
(74) Representative: Grünecker, Kinkeldey, Stockmair & Schwanhäusser Anwaltssozietät

(57) **Abstract**

In a forced-feed gear lubricating system having a pair of meshing gears and a lubricant feed pipe for feeding lubricant to the gears, the feed pipe has a discharging portion through which lubricant is discharged directly against the gears. The discharging portion is constructed and arranged so as to point, when observed in a plane of projection perpendicular to axes of rotation of the gears, a direction included within an angle formed by a first line segment extending from the discharging portion in a way as to point the axis of rotation of one of the gears and a second line segment extending from the discharging portion in a way as to be tangential to an addendum circle of the other of the gears.

## Description

### BACKGROUND OF THE INVENTION

### 1. Field of the Invention

The present invention relates to an improvement in or relating to a forced-feed gear lubricating system including a pair of meshing gears and a lubricant feed pipe for discharging lubricant directly against the gears.

### 2. Description of the Related Art

An example of a prior art forced-feed gear lubricating system is disclosed in Japanese Patent Provisional Publication No. 10-122310. The system includes a pair of larger and smaller gears meshed with each other and a lubricant feed pipe for forcedly feeding lubricating oil to the engaged portions of the gears for thereby preventing seizure of the engaged portions.

### SUMMARY OF THE PRESENT INVENTION

A problem of the prior art system is that in case the gears are rotating at high speed, lubricating oil is splashed by the tip portions of the gears and cannot be fed to the dedendum portions of the gears, so chipping, excessive wear or the like surface defect will possibly occur at the dedendum portions.

It is accordingly an object of the present invention to provide a forced-feed gear lubricating system including at least a pair of meshing gears and a lubricant feed pipe for feeding lubricant directly to the gears, which can feed a sufficient amount of lubricant to the dedendum portions of the gear teeth where excessive wear or the like defect is liable to be caused at the tooth surfaces, and which is attained without increasing the cost.

To achieve the above object, the present invention provides a forced-feed gear lubricating system comprising a pair of meshing gears and a lubricant feed pipe for feeding lubricant to the gears. The feed pipe has a discharging portion through which lubricant is discharged directly against the gears. The discharging portion points, when observed in a plane of projection perpendicular to axes of rotation of the gears, a direction, included within an angle formed by a first line segment extending from the discharging portion in a way as to point the axis of rotation of one of the gears and a second line segment extending from said discharging portion in a way as to be tangential to an addendum circle of the other of the gears.

### BRIEF DESCRIPTION OF THE DRAWINGS

Fig. 1 is a schematic view of a forced-feed gear lubricating system according to an embodiment of the present invention;
Fig. 2 is a schematic view of a further embodiment of the present invention:
Fig. 3 is a schematic view of a belt type continuously variable transmission in which the present invention is incorporated;
Fig. 4 is an enlarged, fragmentary sectional view of a pinion gear, a final gear and a lubricant feeding pipe which are utilized in the transmission of Fig. 3; and
Fig. 5 is a graph of a relation between tooth flank temperature and feeding amount of lubricant.

### DESCRIPTION OF THE PREFERRED EMBODIMENTS

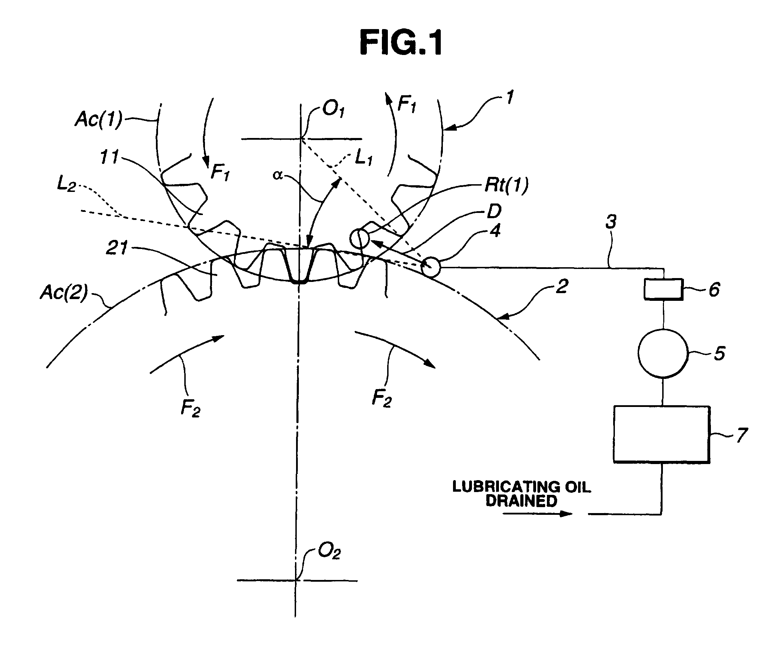

Referring first to Fig. 1, a forced-feed gear lubricating system is shown as including a pair of a larger-diameter gear 1 and a smaller-diameter gear 2 which are rotatably meshed with each other and a lubricant feed pipe 3 for discharging lubricant directly against the pair of gears 1 and 2. The smaller-diameter gear 1 rotates about the center axis O1 in the direction of the arrow F1, and the larger-diameter gear 2 rotates about the center axis O2 in the direction of the arrow F2. Accordingly, the gears 1 and 2 start meshing on the left-hand side in Fig. 1 and unmeshing on the right-hand side.

The lubricant feed pipe 3 is fed with lubricating oil from a tank 7 by way of a pump 5 and an oil cooler 6 and discharges lubricating oil directly against the gears 1 and 2. The lubricant feed pipe 3 has a discharging portion 4 through which lubricating oil is discharged directly against the gears 1 and 2. The discharging portion 4 points, when observed in a plane of projection perpendicular to the axes O1 and O2 of rotation of the gears 1 and 2, the direction which is included within an angle α formed by a first line segment L1 extending from the discharging portion 4 in a way as to point the axis O1 of rotation of the gear 1 and a second line segment L2 extending from the discharging portion 4 in a way as to be tangential to the addendum circle Ac(2) of the gear 2. In the meantime, the discharging portion 4 in this embodiment is constituted by an orifice formed in the circumferential wall of the lubricant feed pipe 3, so the line segments L1 and L2 diverge from the common point coinciding with the center axis of the feed pipe 3.

By the above described construction, the lubricant feed pipe 3 can discharge lubricating oil in a suitable direction (i.e., in the direction of the arrow D) for lubrication of the gears 1 and 2, without requiring a complicated structure. By this, lubricating oil can be fed to the smaller-diameter gear 2 which requires, of the pair of gears 1 and 2, more lubrication, without being splashed by the teeth 11 of the smaller diameter gear 1 and the teeth 21 of the larger-diameter gear 2. Accordingly, with the above described structure, it becomes possible to feed a sufficient amount of lubricating oil to the dedendum portions or root portions Rt (1) of the gear 1 where tooth surface defects are liable to occur. Further, with the above described structure, since a larger amount of lubricating oil can be fed to the root portions Rt (1) of the gear 1 as compared with the prior art system, so the lubricating system of this invention is particularly effective and useful for the gearing which requires cooling.

In the meantime, it is preferable that the discharging portion 4 of the lubricant feed pipe 3 points the same direction as the first line segment L1. When this is the case, the direction in which lubricating oil is discharged or emitted from the lubricant feed pipe 3 is directed toward the center axis O1 of rotation of the smaller-diameter gear 1 which requires more lubrication, so the amount of lubricating oil which is discharged toward the tooth crests to be splashed thereby can be reduced to a minimum possible value. Accordingly, with the above described structure, most effective lubrication can be applied to the gear 1 which is more liable to cause excessive wear or the like defect at the tooth surfaces. Further, since the above described structure enables to attain moot effective lubrication, the roots and their adjacent portions of the gears 1 and 2 can be cooled effectively.

Further, it is preferable that the discharging portion 4 of the lubricant feed pipe 3 is disposed on the unmeshing side where the gears 1 and 2 finish meshing, i.e., unmesh. Specifically, the gears 1 and 2 start meshing on one of opposite sides divided by a plane including the axes O1 and O2 of rotation of the gears 1 and 2 and finish meshing on the other of the sides, wherein the discharging portion 4 is disposed on the other side (i.e., the unmeshing side). By this, lubricant is applied to the tooth surfaces of the gears 1 and 2 which have been heated up to a high temperature by meshing, from the side where the gears 1 and 2 unmesh. Accordingly, with the above described structure, the difference in temperature between the tooth surface and lubricating on is large, so the tooth surfaces can be cooled with more efficiency, thus making it possible to improve the limit of the operable condition under which the meshing gears are operable without causing excessive wear or the like defect at the tooth surfaces.

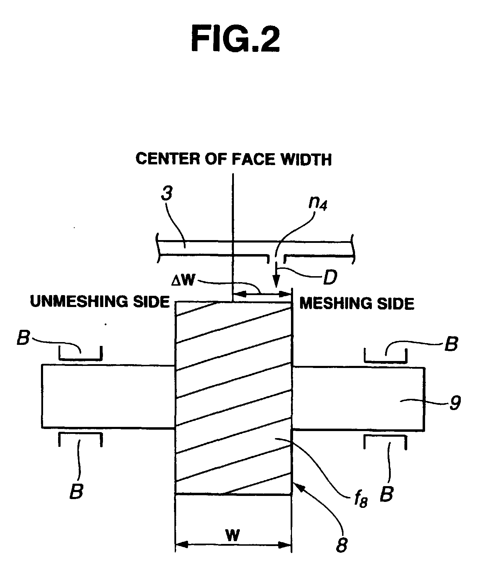

Fig. 2 shows a forced-feed gear lubricating system according to another embodiment, which is viewed from the side where the gears unmesh. The gear 8 in this embodiment is a helical gear and an axis 9 of rotation of the helical gear 8 is supported by bearings B. In this embodiment, when the meshing of the pair of gears is observed in Fig. 2, i.e., in a plane of projection parallel to the axis 9, the gears start meshing on the right-hand side and finish meshing, i.e., unmesh on the left -hand side. In the meantime, in Fig. 2, the other helical gear of the pair is omitted for brevity.

In the above described embodiment where the helical gear 8 is utilized, it is preferable that the discharging portion n4 of the lubricant feed pipe 3 is positioned within the interval ΔW between an end of the face width located on the meshing side and the center of the face width. By this, the lubricating oil discharged from the discharging portion n4 of the lubricant feed pipe 3 is applied to one of the opposite sides of the gear 8, which are opposed in the face width direction (i.e., the meshing starting side of the gear 8), and then conducted through the spaces 8 of the gear 8 to the entirety of the face width W. Accordingly, by this structure, it becomes possible to improve the limit of the operable condition under which the meshing gears are operable without causing excessive wear or the like defect at the tooth surfaces.

In this embodiment, the discharging portion n4 is constituted by a nozzle provided to the circumferential wall of the lubricant feed pipe 3, though it can be an orifice formed in the circumferential wall of the lubricant feed pipe 3. By this, lubricating oil can be applied to the place to be lubricated with more accuracy, thus making it possible to produce more effect of the embodiment described with reference to Fig. 1.

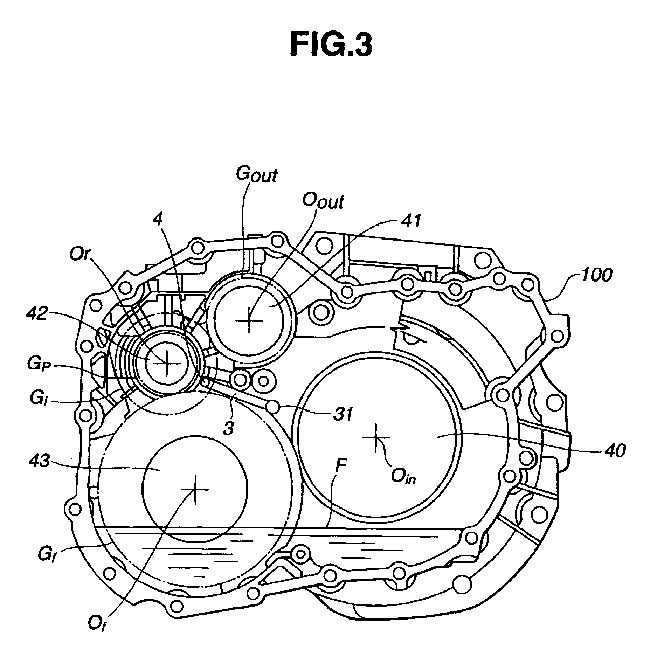

Fig. 3 shows a continuously-variable transmission of the type using a steel belt, which is observed in parallel to the axes of the transmission. The transmission includes four axes, i.e., a center axis Oᵢₙ of a transmission input shaft 40, a center axis Oₒᵤₜ of a transmission output shaft 41, a center axis Or of a reduction shaft 42, and a center axis O_{f} of a final gear 43. In the above described embodiment, a transmission belt or steel belt (not shown) is provided between the transmission input shaft 40 and the transmission output shaft 41 so as to wind around them, whereby to transmit a power of an engine (not shown) inputted to the transmission input shaft 40 to the transmission output shaft 41 by way of the belt.

The reduction shaft 42 mounts thereon an idler gear G_{I} rotatably meshed with an output gear Gₒᵤₜ on the transmission output shaft 41, and a pinion gear GP rotatably meshed with a final gear G_{f} on the final gear shaft 43. The pinion gear GP and the final gear Gf constitutes a final gear pair.

Thus, rotation of the transmission output shaft 41 is transmitted to the final gear shaft 43 of the final gear Gf by way of the idler gear G_{I} mounted on the reduction shaft 42, which is rotatably meshed with the output gear Gout, whereby to be capable of transmitting a varied engine speed to the vehicle wheels.

In the above described continuously-variable transmission, it is required to dispose the input shaft 40 and the final gear shaft 43 at a lower part of the transmission, so the output shaft 41 and the reduction shaft 42 are disposed at an upper part of the transmission. For this reason, lubricating oil (oil surface F) stored in the inside lower part of a transmission case 100 is splashed by the final gear Gf to lubricate various portions of the gears. However, the output gear Gout, the idler gear G_{I} and the pinion gear GP located at the inside upper part of the transmission case 100 are not sufficiently lubricated by the splashed lubricating oil.

Further, the above described final gear pair generally has a large gear ratio, so the load on the pinion gear GP of a small number of teeth is large, and the pinion gear GP is disposed above the final gear Gf within the transmission case 100. For this reason, the pinion gear GP of the final gear pair is inferior in lubrication to the final gear Gf which is lubricated by the lubricating oil stored in the inside lower part of the transmission case 100.

Accordingly, by constructing and arranging the discharging portion 4 of the lubricant feed pipe 3 in a way as to point, when observed in a plane of projection perpendicular to the axes Or and Of of rotation of the pinion gear Gp and the final gear Gf, the direction which is within the angle formed by a first line segment extending from the discharging portion 4 in a way as to point the axis Or of rotation of the pinion gear GP and a second segment extending from the discharging portion 4 in a way as to be tangential to the addendum circuit of the final gear Gf, whereby by lubricating the pinion gear GP of the final gear pair the above described effects of the embodiments described with respect to Figs. 1 and 2 can be attained.

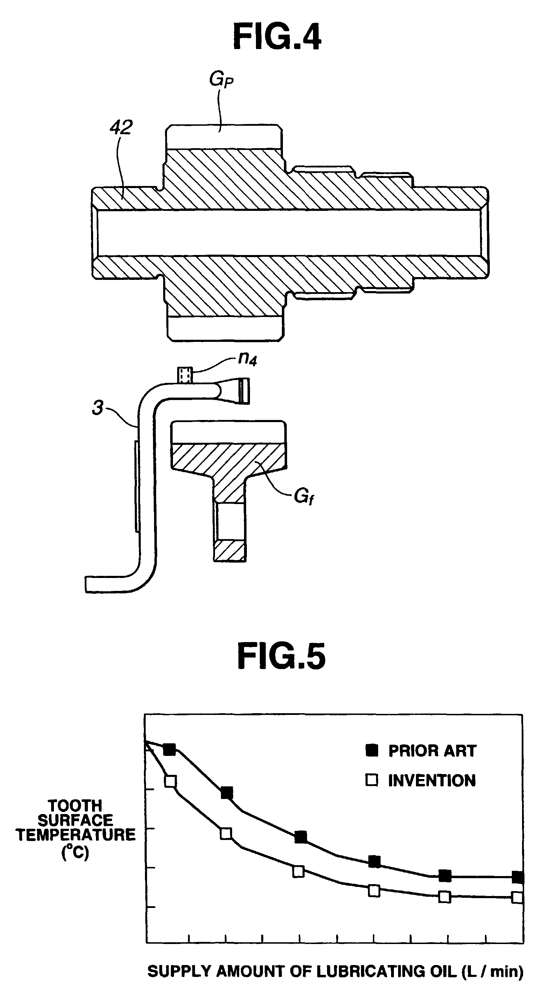

Fig. 4 shows the pinion gear GP, final gear Gf and the lubricant feed pipe 3 according to a variant of the present invention, wherein a nozzle n4 is provided to the lubricant feed pipe 3 to serve as a discharging portion but can be an orifice as described above.

While a pump for exclusive use can be employed for constituting the pressure source for supplying lubricating oil to the lubricant supply pipe 3, it is preferable to use a pump built in the transmission, for example, an oil pump to this end. In this instance, an additional pump for exclusive use can be dispensed with, thus making it possible to make lower the cost.

Further, the lubricating oil can be drawn to the oil pump directly from the tank 7 but preferably by way of an oil cooler 6 (refer to Fig. 1). By this, cooled lubricating oil is supplied to the tooth surfaces of the pinion gear GP. By cooling lubricating oil by means of the cooler 6, the tooth surfaces can be cooled with a higher efficiency, thus making it possible to improve the limit of an operable condition under which the meshing gears are operable without causing excessive wear or the like defect at the tooth surfaces.

In addition, the lubricant supply pipe 3 can be a pipe extending directly from the pump 5 but preferably a pipe branching from a pipe 31 provided for lubrication of transmission (refer to Fig. 3), which is disposed within the transmission, for example, a pipe branching off from a pipe already provided to the transmission for lubrication of the transmission belt and the final gear Gf. By this, most of the lubricant feed pipe 3 can be constituted by the pipe 31 for lubrication of the transmission, thus making it possible to reduce the cost to a minimum possible value.

Fig. 5 shows a relation between the temperature of the tooth surface and the supply amount of lubricating oil. From this graph, it will be seen that the lubrication provided by the system of this invention can make lower the tooth surface temperature as compared with the prior art system.

Although the invention has been described by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A forced-feed gear lubricating system comprising:
a pair of meshing gears; and
a lubricant feed pipe for feeding lubricant to said gears,
said feed pipe having a discharging portion through which lubricant is discharged directly against said gears, said discharging portion pointing, when observed in a plane of projection perpendicular to axes of rotation of said gears, a direction included within an angle formed by a first line segment extending from said discharging portion in a way as to point the axis of rotation of one of said gears and a second line segment extending from said discharging portion in a way as to be tangential to an addendum circle of the other of said gears.

2. A forced-feed gear lubricating system according to claim 1, wherein said discharging portion points the same direction as said first segment.

3. A forced-feed gear lubricating system according to claim 1, wherein said gears start meshing on one of opposite sides divided by a plane including said axes of rotation of said gears and finish meshing on the other of said sides, said discharging portion being disposed on said other side.

4. A forced-feed gear lubricating system according to claim 1, wherein said discharging portion comprises an orifice.

5. A forced-feed gear lubricating system according to claim 1, wherein said discharging portion comprises a nozzle.

6. A forced-feed gear lubricating system according to claim 1, wherein said gears are helical gears, said discharging portion being disposed, when observed in a plane of projection parallel to said axes of rotation of said gears, between a center of a face width of said one gear and one end of said face width on a side where said gears start meshing.

7. A forced-feed gear lubricating system according to claim 1, wherein said one gear is smaller in diameter than said other gear.

8. A forced-feed gear lubricating system according to claim 7, wherein said one gear is a pinion gear of a final gearing of a continuously-variable transmission of the type using a belt.

9. A forced-feed gear lubricating system according to claim 8, wherein said lubricant feed pipe branches off from a piping which is provided in said transmission for gear lubricating thereof.

10. A forced-feed gear lubricating system according to claim 1, further comprising a pressure source for supplying lubricant to said lubricant feed pipe, said pressure source being a pump provided in said transmission for lubrication thereof.

11. A forced-feed gear lubricating system according to claim 10, further comprising a cooler by way of which lubricant is supplied to said lubricant feed pipe after cooled.
